# EUROPÄISCHE PATENTSCHRIFT

(11) **EP 3 400 112 B1**
(45) Veröffentlichungstag und Bekanntmachung des Hinweises auf die Patenterteilung: **14.08.2024**
(21) Anmeldenummer: 17707113.1
(22) Anmeldetag: 08.01.2017
(51) Int. Cl.: B25J 9/04, B25J 9/10

(54) **ROBOTER MIT MEHREREN KOPPELGETRIEBEN IN LEICHTBAUWEISE**
FOUR JOINT CHAIN LIGHTWEIGHT ROBOTS
ROBOT DE CONSTRUCTION LEGERE A CHAINE A 4 JOINTS ARTICULES

(30) Priorität: 08.01.2016 DE 102016000118; 02.03.2016 EP 16020061
(43) Veröffentlichungstag der Anmeldung: 14.11.2018
(73) Patentinhaber: fruitcore robotics GmbH, 78467 Konstanz (DE)
(72) Erfinder: RIEGGER, Jens Robert, 78462 Konstanz (DE); FREY, Manuel Tobias, 78467 Konstanz (DE)
(74) Vertreter: Grünecker Patent- und Rechtsanwälte PartG mbB
(86) Internationale Anmeldenummer: PCT/IB2017/050073
(87) Internationale Veröffentlichungsnummer: WO 2017/118953

(56) Entgegenhaltungen:
- EP-A1- 2 397 279
- EP-A2- 1 052 071
- CN-A- 103 787 205
- CN-A- 104 626 107

## Beschreibung

### Technisches Gebiet

Die Erfindung bezieht sich auf einen Roboter mit einem Sockel, einem Schwenkarm, der an dem Sockel angelenkt und um eine Drehachse schwenkbar ist, wobei an dem freien Ende des Schwenkarms eine drehgelenkige Aufnahme für einen Tragarm vorgesehen sein kann, mindestens einer Antriebseinheit zum Antreiben des Schwenkarms und des möglichen Tragarm, sowie mehrere Gliedelemente zur Übertragung der Bewegung auf den Schwenkarm und den möglichen Tragarm.

### Definitionen

**Koppelgetriebe** sind eine der sechs grundlegenden Arten von Getrieben. Zusammen mit den Kurvengetrieben bilden sie die Gruppe der ungleichförmig übertragenden Getriebe.

Ein Koppelgetriebe, bestehend aus mindestens vier Gliedelementen bildet eine Viergelenkkette. Eine **Viergelenkkette** wird im vorliegenden Fall definiert durch zwei Lager - die ein erstes Gliedelement substituieren - und durch drei weitere bewegliche Gliedelemente. Das angetriebene Gliedelement, gekoppelt an dem ersten Lager, ist die Kurbel, an deren freien Ende drehgelenkig die Koppel angeordnet ist. Letztere ist wiederum mit dem freien Ende des weiteren Gliedelements, nämlich der Schwinge drehgelenkig gekoppelt, wobei das andere Gelenk der Schwinge wiederum mit dem zweiten Lager gekoppelt ist.

Unter einem **Gliedelement** wird ein Element verstanden, das in Zusammenwirkung mit anderen Gliedelementen eine Bewegung von Schwenkarm und/oder Tragarm bewirkt und die Kräfte, auch im Stillstand, zumindest teilweise auf insbesondere Sockel und Schwenkarm verteilt. Jedes Gliedelement weist jeweils an seinen freien Enden ein Gelenk zur Koppelung mit einem weiteren Gliedelement auf. Zwischen den Gelenken ist ein Körperelement vorgesehen. Ein Gliedelement kann aus mehreren Elementen bestehen. Dabei ist an den freien Enden als Gelenk ein Drehgelenk vorgesehen, das in der Ebene einen Freiheitsgrad aufweisen kann. Alternativ kann auch ein Kugelgelenk vorgesehen sein, das drei rotatorische Freiheitsgrade aufweist. Alternativ können diese auch an ihren freien Enden separate Aufnahmen aufweisen, die zur Gelenkbildung dienen. Die Körperelemente der Gliedelemente sind platten- und/oder stabförmige Elemente. Darunter sind Elemente zu verstehen, die langgestreckt sind (länger als breit) und in Bezug auf ihre Dicke dünn sind, d.h. eine dünne balkenartige oder stabförmige oder plattenförmige Ausbildung aufweisen. Diese können auch Freiform-Strukturen aufweisen, derart, dass bei den entsprechenden Bewegungsabläufen Kollisionen mit anderen Gliedelementen vermieden werden. Gliedelemente der vorstehenden Art lassen sich auch im 3D Druck herstellen.

Der Roboter weist einen **Sockel** auf. Dieser Sockel wird als Fundament für die Aufnahme der bewegten Tragstruktur - insbesondere Schwenkarm und Tragarm - verstanden. Dieser Sockel ist entweder einteilig oder mehrteilig ausgebildet. Es kann vorgesehen sein, dass der Sockel translatorisch und/oder rotatorisch bewegt oder ortsfest angeordnet ist.

Als **Antriebseinheit** ist ein Antriebsmotor sowie eine mit dem Motor eventuell gekoppelte Getriebeeinheit und/ oder eine Transmissionseinheit zur Übertragung des Drehmoments des Antriebsmotors auf eine Antriebswelle zu verstehen. Unter dem Begriff Getriebeeinheit sind überwiegend Zahnradkopplungen, unter dem Begriff Transmissionseinheit sind alle übrigen Kopplungen zu verstehen, beispielsweise Riemenkopplungen.

Als bewegte **Tragstruktur** sind alle beweglichen Teile (ausser dem Sockel) des Roboters zu verstehen, insbesondere Schwenk- und Tragarm.

Sockel, Schwenk- und Tragarm werden als **Grundelemente** des Roboters definiert. Diese können entweder einteilig oder mehrteilig ausgeführt sein.

### Technisches Gebiet

Die konventionellen technischen Lösungen bekannter Roboter, insbesondere Knickarmroboter, bestehen aus einem Sockel, einem Schwenkarm sowie einem Tragarm. Sockel, Schwenkarm und Tragarm sind gelenkig, vorzugsweise drehgelenkig miteinander gekoppelt und deren Drehachsen zumindest teilweise angetrieben. Somit erfolgt der Antrieb von Schwenkarm und Tragarm in der Regel direkt in den zugehörigen Rotationsachsen mittels Antriebsmotoren, die gegebenenfalls zusätzlich mit einer Getriebeeinheit gekoppelt sind. Bekannt sind ebenfalls Ausführungen von Knickarmrobotern, bei denen die beiden Armelemente über Riementriebe oder Seilzüge angetrieben werden. Auch Knickarmroboter, bei denen die Armelemente mittels Viergelenkgestängen indirekt angetrieben werden sind Stand der Technik.

### Stand der Technik

Aus der EP 2 397 279 A1 ist ein Knickarmroboter mit einem Koppelgetriebe bekannt. Dieser Knickarmroboter weist einen Sockel mit einer ersten Drehachse auf sowie eine Basis, an der drehgelenkig ein Schwenkarm gekoppelt ist. Mit dem Schwenkarm ist zumindest indirekt ein Tragarm gekoppelt, an dessen freiem Ende ein Handhabungswerkzeug angeordnet ist.

An der Basis ist ein Antriebsmotor vorgesehen, wobei über Koppelgetriebe der Schwenkarm angetrieben wird. Ein weiterer Antriebsmotor ist ebenfalls an der Basis angeordnet und treibt über ein weiteres Koppelgetriebe den Tragarm an, wobei dieses Koppelgetriebe eine Viergelenkkette darstellt.

Die CN 104 626 107 A offenbart einen Handhabungsarm, bei dem ein Verbindungselement mit einem freien Ende in einem Sockel gelagert ist, und an einem gegenüberliegenden freien Ende in einem gemeinsamen Drehgelenk mit einem Hebebalken und einem Element eines Gelenktriebes verbunden ist. In der EP 1 052 071 A2 wird eine entsprechende Kinematik für eine Hochgeschwindigkeit-Industrie-Handhabungsvorrichtung gezeigt.

### Aufgabe der Erfindung

Der Erfindung liegt die Aufgabe zugrunde, einen Roboter zu schaffen, der gegenüber den bestehenden Robotervarianten geringere Eigenmassen bei gleichzeitig hoher Steifigkeit der gesamten Tragstruktur aufweist.

### Lösung der Aufgabe

Die Lösung der Aufgabe wird durch die Merkmale von Anspruch 1 bereitgestellt.

### Vorteile der Erfindung

Der Grundgedanke der Erfindung bringt neben der Lösung des Problems die Vorteile mit sich, dass eine besondere Ausführungsform des Roboters aus kostengünstig herstellbaren Grundbauteilen besteht, einen grossen Arbeitsraum und erhöhte Bewegungsgeschwindigkeiten aufweist. Aufgrund der kinematischen Struktur und der dadurch bezogen auf das Gewicht leichten Bauteile reicht eine geringere Leistung der Antriebe aus. Der so entstehende Roboter kann dadurch sehr günstig hergestellt werden, ohne dabei Abstriche bei der Funktionalität zu machen. Auf der anderen Seite lässt die erfinderische Ausbildung auch zu, dass der Roboter skalierbar ist und daher auch für andere Einsätze vorgesehen sein kann. Aufgrund der Ausbildung der Kinematik für Schwenkarm und Tragarm ist es bei entsprechender Dimensionierung dieser Kinematik möglich, beispielsweise schwere Lasten zu heben und zu bewegen.

Bei dem hier zugrundeliegenden Roboter bilden Schwenkarm und ein Tragarm eine aus zwei Grundelementen bestehende mechanische serielle kinematische Kette.

Diese werden durch Antriebseinheiten über Gliedelemente bewegt. Eine minimale Ausführung eines solchen Roboters kann zwei Freiheitsgrade aufweisen. Über das Drehen des Sockels um die vertikale Achse und das Anschliessen eines Handgelenks am Ende des Tragarms kann die maximale Anzahl an Freiheitsgraden erreicht werden.

Der hier vorliegende Grundgedanke der Erfindung besteht darin, sowohl Schwenkarm als auch Tragarm zumindest indirekt über Viergelenkketten anzutreiben. Dies bedeutet, dass die jeweilige Antriebsachse nicht mit der Rotationsachse des jeweiligen Arms fluchtet. Die Antriebseinheiten befinden sich vorzugsweise jeweils am Sockel und sind somit nicht in der bewegten Tragstruktur. Dadurch entsteht der grosse Vorteil, dass sich an den bewegten Bauteilen selbst keine Antriebsbauteile, wie Antriebsmotoren, Getriebe, Lagerungen von Riemenscheiben und Zahnrädern oder Ähnliches befinden. Somit kann ein erhebliches Gewicht eingespart werden, was nicht zusätzlich bewegt und durch entsprechend dimensionierte Lager aufgefangen werden muss. Dadurch ist eine leichte Bauweise des Roboters möglich.

Eine bevorzugte Ausführung besteht darin, Schwenkarm, Tragarm und die jeweiligen Gliedelemente der Viergelenkketten aus stab- und/oder plattenförmigen Elementen zu bilden. Dabei bestehen der Schwenkarm und der Tragarm aus jeweils mindestens zwei zueinander angeordneten stab- und/oder plattenförmigen Elementen, die durch ein Verbindungselement auf Abstand gehalten werden, so dass für die jeweilige armartige Ausbildung ein grösseres Trägheitsmoment entsteht.

Der Sockel ist vorzugsweise aus stab- und/oder plattenförmigen Elementen gebildet. Dabei sind Verbindungselemente vorhanden, die die notwendige Stabilität des Sockels bereitstellen. Zudem sind Aufnahmen für die Antriebseinheiten an dem Sockel vorgesehen. Der Abstand der stab- und/oder plattenförmigen Elemente ist derart gestaltet, dass die Ausbildungen des Schwenkarms und des Tragarms dazwischen angeordnet sind. Eine bevorzugte Ausführungsform des Roboters stellt eine U-förmige Ausbildung des Sockels dar. Dabei werden die Antriebseinheiten unterhalb, d. h. an der geschlossenen U-Seite montiert, die Rotationsbewegung wird über einen Riementrieb auf die Antriebswelle geleitet.

Durch diese Art der Ausführung der stab- und/oder plattenförmigen Elemente ist es möglich, eine sehr kompakte und steife Gesamtstruktur zu erzielen. Hierbei werden die einzelnen Elemente (Sockel, Schwenkarm, Tragarm sowie Viergelenkketten mit ihren Gliedelementen) mit stab- und/oder plattenförmigen Elementen aus einer Legierung, einem Faserverbundwerkstoff oder einem Kunststoff oder anderen Materialien, die gegebenenfalls mit Aussparungen versehen sind, aufgebaut. Dadurch können die Fertigungskosten des Roboters gesenkt werden, da die stab- und/oder plattenförmigen Elemente kostengünstig herstellbar sind und in wenigen Arbeitsschritten zu einer steifen Struktur aufgebaut werden können. Alternativ können die einzelnen Elemente beispielsweise aus Druckgussteilen, Frästeilen, Drehteilen oder 3D-Druckteilen bestehen.

Der Roboter kann symmetrisch aufgebaut werden, was den Vorteil mit sich bringt, dass keine ungünstigen Torsionsbeanspruchungen und Momente in die Tragstruktur des Roboters eingeleitet werden.

**Eine einfache Ausbildung sieht vor, dass an dem Sockel eine Antriebseinheit angeordnet ist, wobei diese Antriebseinheit mit einem ersten Gliedelement einer ersten Viergelenkkette und diese Viergelenkkette mit einer zweiten Viergelenkkette gekoppelt ist, wobei letzte mit dem Schwenkarm des Roboters gekoppelt ist.**

**Vorteilhafterweise sind an dem Sockel zwei Antriebseinheiten angeordnet, wobei eine Antriebseinheit mit dem ersten Gliedelement der ersten Viergelenkkette und die zweite Antriebseinheit mit dem ersten Gliedelement einer dritten Viergelenkkette gekoppelt sind.**

Der Schwenkarm wird ausgehend von einer ersten Antriebseinheit über zwei Viergelenkketten angetrieben. Die erste Viergelenkkette weist ein erstes Gliedelement als Kurbel auf. Dieses Gliedelement ist drehfest mit einer Antriebswelle verbunden, die zumindest indirekt mit der ersten Antriebseinheit gekoppelt ist. An diesem Gliedelement schliesst sich drehgelenkig verbunden als Koppel ein zweites Gliedelement an, an dessen freiem Ende mit seinem ersten Ende ein drittes Gliedelement als Schwinge drehgelenkig verbunden ist, dessen freies Ende wiederum ortsfest aber drehgelenkig mit dem Sockel gekoppelt ist.

Die zweite Viergelenkkette besteht aus einem weiteren Gliedelement als Kurbel, dessen eines freies Ende vorzugsweise an dem Sockel gekoppelt ist und der Schwinge der ersten Viergelenkkette entspricht. Diese Kurbel wird jedoch nicht durch einen Antrieb, sondern von der ersten Viergelenkkette bewegt. Das andere Ende ist mit einem weiteren Gliedelement (Koppel) drehgelenkig gekoppelt, wobei das an dem der ersten Viergelenkkette gegenüberliegendes Ende mit dem Schwenkarm drehgelenkig gekoppelt ist. Der Schwenkarm entspricht der Schwinge der zweiten Viergelenkkette, da der Schwenkarm an dem Sockel drehgelenkig gekoppelt ist.

Dabei ist das Gliedelement, welches Bestandteil der ersten und der zweiten Viergelenkketten ist, vorzugsweise drehgelenkig am Sockel angeordnet. Dadurch wird ein wesentlicher Anteil der Kräfte, die durch das Halten und / oder das Bewegen insbesondere von Traglasten des Roboters entstehen, in den stabilen und massiven Sockel abgeleitet. Die Leistung des Antriebsmotors kann daher im Vergleich zu bisherigen Ausführungen von Knickarmrobotern, die die durch die entstehenden Kräfte fast ausschliesslich über die Tragstruktur verteilen, geringer ausfallen. Dies führt wiederum dazu, dass die Antriebseinheiten entlastet werden.

Alternativ können anstelle der bisher beschriebenen zweiten Viergelenkkette zwei weitere Viergelenkketten treten, derart, dass die Koppel der bisher beschriebenen zweiten Viergelenkkette aus zwei Gliedelementen besteht, wobei das erste Gliedelement die Koppel der bisher beschriebenen zweiten Viergelenkkette und das zweite Gliedelement die Koppel einer weiteren Viergelenkkette darstellt, wobei von der drehgelenkigen Verbindung dieser Gliedelemente sich ein weiteres, drehgelenkig verbundenes Gliedelement erstreckt, das am freien Ende drehgelenkig mit dem Sockel gekoppelt ist und die Schwinge der zweiten sowie die Kurbel der weiteren Viergelenkkette darstellt. An dem der Kurbel gegenüberliegenden Ende der Koppel ist drehgelenkig ein weiteres Gliedelement (Schwinge), in Form des Schwenkarms, gekoppelt.

Die zweite Antriebseinheit weist eine Antriebsachse auf, die drehfest mit einem Gliedelementelement der dritten Viergelenkkette gekoppelt ist. Dadurch kann der Tragarm entsprechend bewegt werden.

Nachstehend werden unterschiedliche Ausführungen beschrieben, die aufzeigen, wie der Tragarm mit einer, mit zwei oder auch mit drei Viergelenkketten vorteilhaft bewegt werden kann.

### Erste Alternative

Diese dritte Viergelenkkette weist ein erstes Gliedelement auf, das drehfest mit einer Antriebsachse der Antriebseinheit gekoppelt ist, wobei an das erste Gliedelement (Kurbel) sich an dem der Antriebsachse gegenüberliegenden Ende ein weiteres Gliedelement als Koppel anschliesst und dieses wiederum drehgelenkig mit dem Tragarm gekoppelt ist und dieser so das dritte Gliedelement als Schwinge der Viergelenkkette bildet.

### Zweite Alternative

Alternativ kann vorgesehen sein, dass an Stelle der eben beschriebenen dritten Viergelenkkette zwei Viergelenkketten derart ausgebildet sind, dass an Stelle der eben beschriebenen Koppel (erste Alternative) zwei Gliedelemente treten, wobei diese Gliedelemente jeweils die Koppeln einer neuen dritten Viergelenkkette und einer neuen vierten Viergelenkkette darstellen, wobei von der drehgelenkigen Verbindung dieser beiden Gliedelemente sich ein weiteres, drehgelenkig verbundenes Gliedelement erstreckt, das am freien Ende drehgelenkig mit dem Schwenkarm gekoppelt ist und die Schwinge der neuen dritten Viergelenkkette sowie die Kurbel der neuen vierten Viergelenkkette bildet.

### Dritte Alternative

Eine vorteilhafte Ausführung sieht vor, dass für die Bewegung des Tragarms drei Viergelenkketten, d.h. insgesamt eine dritte, eine vierte und eine fünfte Viergelenkkette, eingesetzt werden.

Die dritte Viergelenkkette weist ein erstes Gliedelement auf, das drehfest mit einer Antriebsachse einer zweiten Antriebseinheit gekoppelt ist, wobei an das erste Gliedelement (Kurbel) sich an dem der Antriebsachse gegenüberliegenden Ende ein weiteres Gliedelement als Koppel anschliesst und an dieses ein drittes Gliedelement als Schwinge anschliesst, wobei das freie Ende dieses dritten Gliedelements der dritten Viergelenkkette mit seinem einen Ende wiederum drehgelenkig mit dem Schwenkarm gekoppelt ist. Dieses dritte Gliedelement der dritten Viergelenkkette entspricht dem ersten Gliedelement der vierten Viergelenkkette, das als Kurbel dient, wobei es mit dem Ende eines zweiten Gliedelements der vierten Viergelenkkette gekoppelt ist und dieses wiederum drehgelenkig mit einem dritten Gliedelement gekoppelt ist, dessen freies Ende wiederum mit dem Schwenkarm drehgelenkig verbunden ist. Dieses dritte Gliedelement der vierten Viergelenkkette entspricht dem ersten Gliedelement der fünften Viergelenkkette, das als Kurbel dient, wobei es mit dem Ende eines zweiten Gliedelements der fünften Viergelenkkette gekoppelt ist und dieses wiederum drehgelenkig mit dem Tragarm gekoppelt ist und dieser so das dritte Gliedelement in Ausbildung einer als Schwinge der Viergelenkkette bildet.

Durch die Ausbildungen der eben beschriebenen Viergelenkketten wird erreicht, dass die durch eine Traglast oder ähnliche Beanspruchungen des Roboters verursachten Belastungen gleichmässig auf den Schwenkarm und somit auf die Tragstruktur und den Sockel abgeleitet werden und die Gliedelemente sich dahingehend ergänzen, dass je nach Roboterposition mindestens eines der beiden Gliedelemente, die an dem Schwenkarm angreifen, Kräfte aufnimmt und somit der Antriebsmotor in nahezu jeder Position des Roboters merklich entlastet wird. Zudem besteht durch die Ausbildung der Viergelenkketten zusammen mit den Antriebseinheiten die Möglichkeit, einen grösseren Arbeitsraum abzudecken.

Gemäss der Erfindung wird der Schwenkarm so ausgeführt, dass er um eine Drehachse eine Wippe bildet, wobei auf der einen Seite der Wippe, der Antrieb des Schwenkarms (durch die erste und zweite Viergelenkkette) und auf der anderen Seite der Tragarm angeordnet ist. Dies bringt den Vorteil, dass die durch die Belastung entstehenden Kräfte am Tragarm durch den wippenförmigen Aufbau, zum Teil ausgeglichen werden und somit die erforderliche Antriebsleistung merklich minimieren, was sich wiederum auf die Herstellkosten positiv auswirkt.

Eine Weiterbildung sieht eine Kombination mit Ausgleichselementen vor (wie beispielsweise Federn oder Gewichten), die insbesondere im Bereich zwischen der zweiten Drehachse und dem Angriffspunkt des Schwenkarmantriebs angebracht werden.

Die Anordnung und Längenverhältnisse der Gliedelemente, insbesondere derer, die als Kurbel ausgebildet sind, ermöglicht zudem, bei abgestimmten Abständen der einzelnen Gelenkachsen zueinander, dass sich die durch Belastungen entstehende Kräfte gegenseitig zumindest teilweise ausgleichen und Drehmomentspitzen im Drehmomentverlauf minimiert werden.

Gemäss einer weiteren bevorzugten Ausführungsform des Roboters werden die Anordnungen der insbesondere als Kurbeln ausgebildeten Gliedelemente (beider Antriebe) zueinander so gewählt, dass die Antriebsleistungen der beiden Antriebsmotoren in ihrem Maximum gleich gross sind. Dies bringt den Vorteil, dass baugleiche Bauteile (Motor, Getriebe, Riemen o.ä.) verwendet werden können und somit weiter Kosten eingespart werden können.

Eine einfache Ausführung des Roboters sieht vor, Schwenkarm und Tragarm aus stab- und/oder plattenförmigen Elementen zu gestalten, ein geringes Gewicht in der bewegten Tragstruktur zu erzielen. Alternativ kann dies durch Leichtbaumaterialien, wie Faserverbundwerkstoffen, unabhängig von der Struktur, auch erreicht werden. Die Gliedelemente können stab- oder plattenförmig sein, oder sonstige Freiformen aufweisen.

Weitere vorteilhafte Ausgestaltungen gehen aus der nachfolgenden Beschreibung, den Ansprüchen sowie den Zeichnungen hervor.

### Zeichnungen

Es zeigen:
- Fig. 1: eine schematische Seitenansicht auf den Roboter;
- Fig. 2: eine rückwärtige Ansicht auf den Roboter gemäss Fig. 1 in Pfeilrichtung II, ohne die Darstellung einer Antriebseinheit;

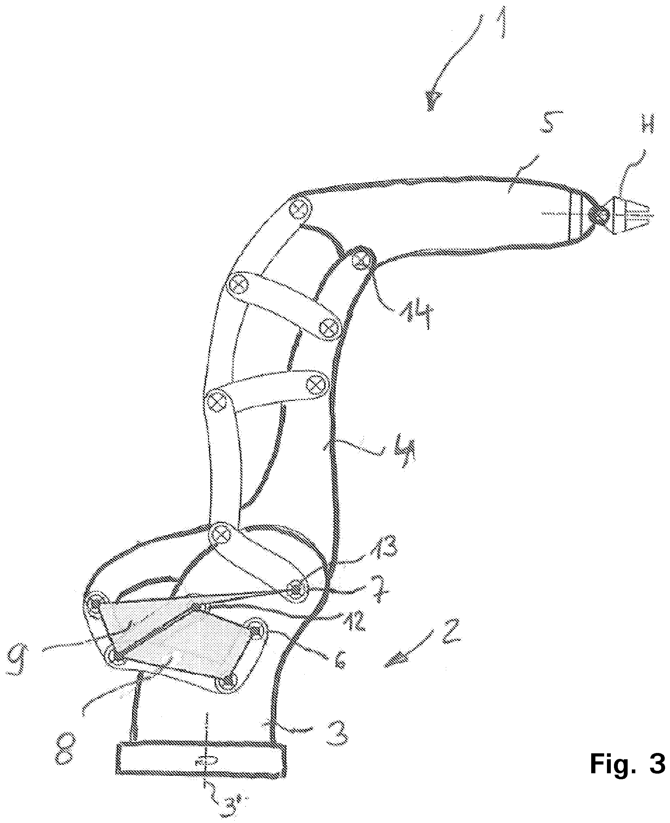

- Fig. 3: eine schematische Darstellung der ersten und zweiten Vielgelenkkette an dem Roboter gemäss Fig. 1;

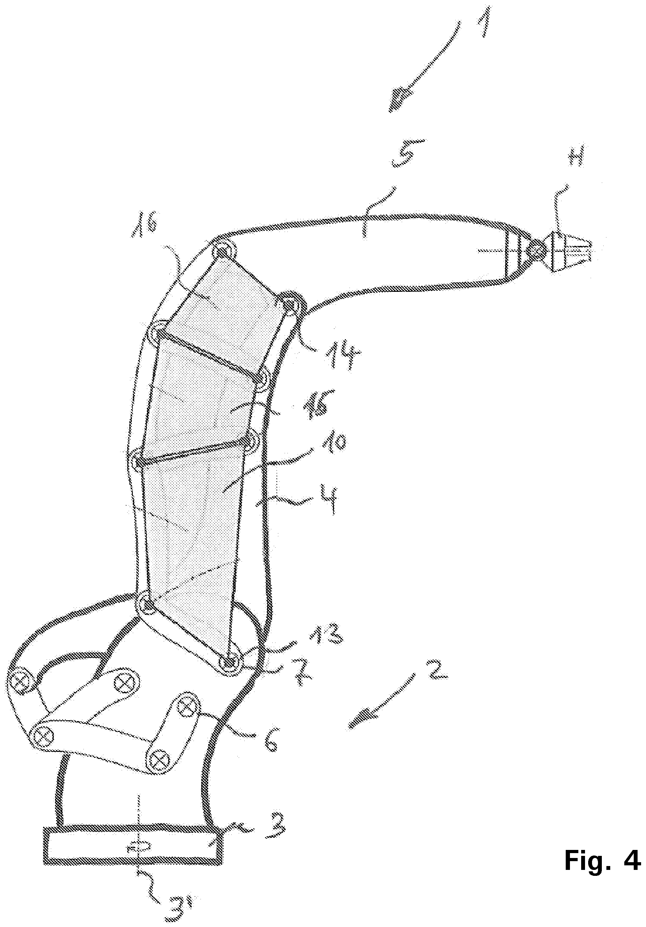

- Fig. 4: eine schematische Darstellung der dritten Vielgelenkkette an dem Roboter gemäss Fig. 1.

### Beschreibung eines Ausführungsbeispiels

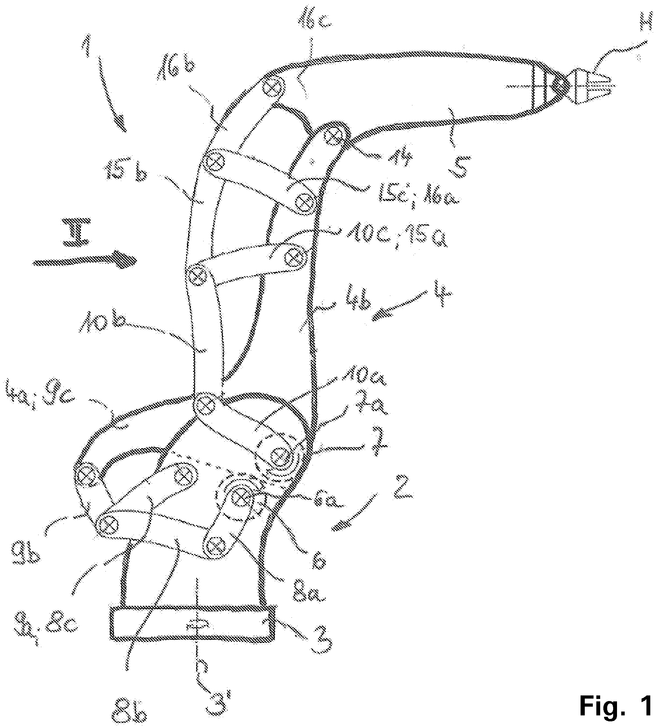

Fig. 1 stellt schematisch eine Seitenansicht auf den erfindungsgemässen Roboter 1 dar. Dieser Roboter 1 besteht aus einer Basis 2, die einen Sockel 3 umfasst sowie einem Schwenkarm 4 und einem an diesen Schwenkarm 4 angelenkten Tragarm 5. An dem freien Ende des Tragarms 5 ist eine Handhabungseinheit H, beispielsweise ein Greifarm vorgesehen

Der hier dargestellte Roboter weist 6 Freiheitsgrade auf. Ein erster Freiheitsgrad wird durch die Drehung des Sockels 3 um eine erste Drehachse 3' dargestellt. Die weiteren Freiheitsgrade werden durch Schwenkbewegungen des Schwenkarms 4 und des Tragarms 5 erreicht, wobei die Schwenkbewegung des Schwenkarms 4 durch die erste Antriebseinheit 6 in Zusammenwirkung mit einer ersten und einer zweiten Viergelenkkette 8, 9 erreicht wird. Die Schwenkbewegung des Tragarms 5 wird durch die zweite Antriebseinheit 7 in Verbindung mit der dritten Viergelenkkette 10, der vierten Viergelenkkette 15 sowie der fünften Viergelenkkette 16 erreicht. Dabei verschwenkt der Schwenkarm 4 um eine erste Drehgelenkachse 13 und der Tragarm 5 um eine zweite Drehgelenkachse 14. Die übrigen Freiheitsgrade werden durch die Handhabungseinheit H erreicht.

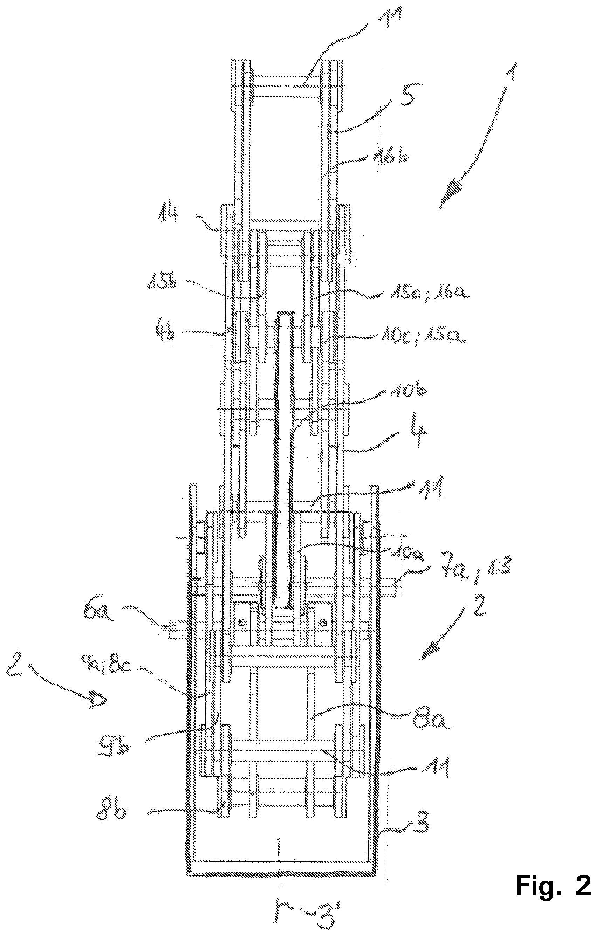

Wie in Fig. 2 dargestellt, bestehen Basis 2 und damit der Sockel 3 sowie der Schwenkarm 4 und der Tragarm 5 aus plattenartigen Elementen. Die plattenartigen Elemente sind im Abstand zueinander angeordnet und über ein oder mehrere Verbindungselemente 11 miteinander verbunden. Dadurch entsteht eine sehr leichte aber sehr steife Konstruktion. Dieser symmetrische Aufbau führt dazu, dass in der Tragstruktur selbst kaum Biege- und Torsionsbelastungen auftreten, da sich die Struktur gegenseitig stützt.

Die erste Viergelenkkette 8 geht von der Antriebseinheit 6 aus. Diese Antriebseinheit 6 ist in dem Sockel 3 angeordnet und weist ein Getriebe oder eine gleichwirkende Transmission auf eine in dem Sockel 3 gelagerte Antriebswelle 6a auf. Mit dieser Antriebswelle 6a drehfest verbunden ist ein erstes Gliedelement 8a als Kurbel vorgesehen. An dieses Gliedelement 8a schliesst sich drehgelenkig verbunden als Koppel ein zweites Gliedelement 8b an, an dessen freiem Ende mit seinem ersten Ende ein drittes Gliedelement 8c als Schwinge drehgelenkig verbunden ist, dessen freies Ende wiederum ortsfest aber drehgelenkig über ein Drehgelenk 12 gekoppelt ist, wobei das Drehgelenk 12 an dem Sockel 3 angeordnet ist.

Dabei kann das dritte Gliedelement entweder unmittelbar am Sockel 3 oder relativ ortsfest zum Socke! 3 drehgelenkig angeordnet sein. Dies bedeutet, dass es nicht notwendig ist, dieses Gliedelement 8c direkt am Sockel anzuordnen.

Dieses Gliedelement 8c übernimmt auch die Rolle, die von dem Schwenkarm 4 über die zweite Viergelenkkette 9 geleiteten Kräfte zumindest teilweise aufzunehmen, so dass die erste Antriebseinheit 6 entlastet wird.

Die zweite Viergelenkkette 9 wird von der ersten Viergelenkkette 8 in Bewegung versetzt und ist daher mit dieser gekoppelt.

Die zweite Viergelenkkette 9 besteht aus einem weiteren Gliedelement 9a als Kurbel, dessen eines freies Ende drehgelenkig an dem Sockel 3 (über das Drehgelenk 2) verbunden ist und an sich der Schwinge (gekennzeichnet mit Gliedelement 8c) der ersten Viergelenkkette 8 entspricht. Das andere Ende ist mit einem weiteren Gliedelement 9b (Koppel) drehgelenkig gekoppelt, wobei das der ersten Viergelenkkette 8 gegenüberliegende Ende mit dem freien Ende 9c des Schwenkarms 4 drehgelenkig gekoppelt ist. Dieser Teil des Schwenkarms 4 entspricht der Schwinge der zweiten Viergelenkkette 9, da der Schwenkarm 4 an dem Sockel 3 über ein Drehgelenk mit einer Drehgelenkachse 1 3 gekoppelt ist. Die Drehgelenkachse 13 entspricht der Achse der Antriebswelle 7a der zweiten Antriebseinheit 7. Alternativ kann auch vorgesehen sein, die Drehgelenkachse 3 und die Achse der Antriebswelle 7a beabstandet voneinander auszuführen. Der Schwenkarm 4 ist wippenartig ausgebildet und weist zwei Bereiche auf, nämlich einen ersten Bereich 4a, an dessen freien Ende das weitere Gliedelement 9b der zweiten Viergelenkkette 9 angeordnet ist und einen zweiten Bereich 4b, an dessen freien Ende der Tragarm 5 angelenkt ist.

Die zweite Antriebseinheit 7 weist eine Antriebswelle 7a auf, die drehfest mit einem ersten Gliedelement 10a der dritten Viergelenkkette 10 gekoppelt ist. Dadurch kann der Tragarm 5 in Verbindung mit der vierten Viergelenkkette 5 und der fünften Viergelenkkette 6 entsprechend bewegt werden.

An das erste Gliedelement 10a (Kurbel) schliesst sich an dem der Antriebswelle 7a gegenüberliegenden Ende ein weiteres Gliedelement 10b als Koppel und an dieses ein drittes Gliedelement 10c als Schwinge an, wobei das freie Ende dieses dritten Gliedelements 10c der dritten Viergelenkkette 10 mit seinem einen Ende wiederum drehgelenkig mit dem Schwenkarm 4 gekoppelt ist.

Dieses dritte Gliedelement 10c der dritten Viergelenkkette 10 ist das erste Gliedelement 15a der vierten Viergelenkkette 15, welches als Kurbel dient. Es ist gekoppelt mit dem Ende eines zweiten Gliedelements 15b der vierten Viergelenkkette 15 und dieses ist wiederum drehgelenkig mit einem dritten Gliedelement 15c gekoppelt, dessen freies Ende wiederum mit dem Schwenkarm 4 drehgelenkig verbunden ist.

Dieses dritte Gliedelement 15c der vierten Viergelenkkette 15 ist das erste Gliedelement 16a der fünften Viergelenkkette 16, welches als Kurbel dient. Es ist gekoppelt mit dem Ende eines zweiten Gliedelements 16b der fünften Viergelenkkette 16 und dieses ist wiederum drehgelenkig mit Tragarm 5 gekoppelt und bildet das dritte Gliedelement 16c in Ausbildung einer Schwinge. Dieses Gliedelement 16c kann somit der Ausbildung des Tragarms 5 entsprechen.

Diese Anlenkung des zweiten Gliedelements 16b der fünften Viergelenkkette 16 ist von der Anlenkung des Schwenkarms 4 an den Tragarm 5 beabstandet.

Durch die Ausbildung der zweiten Antriebseinheit, der Ausbildung der Viergelenkketten 10, 15, 16 werden durch die Gliedelemente 10c und 15c der dritten und vierten Viergelenkkette 10, 15 die durch die Traglast entstehenden Belastungen gleichmässig auf den Schwenkarm 4 verteilt, was wiederum dazu führt, dass eine geringere Antriebsleistung zum Verschwenken des Schwenkarms 4 und des Tragarms 5 benötigt wird.

Durch die gewichtsmässig leichte Ausbildung eines Schwenkarms 4 und eines möglichen Tragarms 5 sowie zumindest der Verwendung einer ersten und zweiten Viergelenkkette 8, 9 zur kinematischen Bewegung und der Anordnung der Antriebseinheiten 6, 7 in den Bereich des Sockels 3 ist ein Mehrachsroboter in der Ausbildung eines Knickarmroboters geschaffen worden, der bei einer hohen Steifigkeit sehr leicht ist, sehr schnelle Bewegungen ausführen kann, einen grossen Arbeitsraum abdeckt und zudem aufgrund der Bauweise kostengünstig herstellbar ist.

### BEZUGSZEICHENLISTE

### Roboter mit mehreren Koppelgetrieben in Leichtbauweise

- 1: Roboter
- 2: Basis
- 3: Sockel
- 3': erste Drehachse
- 4: Schwenkarm
- 5: Tragarm
- 6: Antriebseinheit
- 6a: Antriebswelle
- 7: Antriebseinheit
- 7a: Antriebswelle
- 8: Viergelenkkette
- 8a: Gliedelement
- 8b: Gliedelement
- 8c: Gliedelement
- 9: Viergelenkkette
- 9a: Gliedelement
- 9b: Gliedelement
- 9c: freies Ende
- 10: Viergelenkkette
- 10a: Gliedelement
- 10b: Gliedelement
- 10c: Gliedelement
- 11: Verbindungselemente
- 12: Drehgelenk
- 13: Drehgelenkachse
- 14: Drehgelenkachse
- 15: Viergelenkkette
- 15a: Gliedelement
- 15b: Gliedelement
- 15c: Gliedelement
- 16: Viergelenkkette
- 16a: Gliedelement
- 16b: Gliedelement
- 16c: Gliedelement
- H: Handhabungseinheit

## Patentansprüche

1. Roboter mit
- einem Sockel (3),
- einem Schwenkarm (4), der an dem Sockel (3) angelenkt ist und um eine Drehachse (13) schwenkbar ist, wobei an einem freien Ende eines zweiten Bereichs (4b) des Schwenkarms (4) eine drehgelenkige Aufnahme für einen Tragarm (5) vorgesehen sein kann,
- mindestens einer Antriebseinheit (6, 7) zum Antreiben des Schwenkarms (4) und des möglichen Tragarms (5), sowie
- mehreren Gliedelementen zur Übertragung der Bewegung auf den Schwenkarm (4),
- wobei eine erste Antriebseinheit (6) mit einer ersten Viergelenkkette (8) gekoppelt ist, wobei ein als Kurbel ausgebildetes erstes Gliedelement (8a) drehfest mit einer ersten Antriebswelle (6a) gekoppelt ist, die in dem Sockel (3) gelagert und mit der Antriebseinheit (6) verbunden ist, derart, dass dieses erste Gliedelement (8a) in eine rotatorische Bewegung versetzbar ist, derart, dass der Schwenkarm (4) um die zweite Drehachse (13) verschwenkbar ist, da ein freies Ende des ersten Gliedelements (8a) mit einem zweiten Gliedelement (8b) als Koppel und dessen freies Ende mit einem dritten Gliedelement (8c) als Schwinge gekoppelt ist, dessen freies Ende wiederum relativ ortsfest zu dem Sockel (3) oder an dem Sockel (3) angeordnet ist, und so die Gliedelemente der ersten Viergelenkkette (8) bilden, und
- wobei mit der ersten Viergelenkkette (8) eine zweite Viergelenkkette (9) gekoppelt ist, derart, dass die zweite Viergelenkkette (9) ein Gliedelement (9a) umfasst, das dem dritten Gliedelement (8c) der ersten Viergelenkkette (8) entspricht, dessen eines freies Ende relativ ortsfest zu dem Sockel (3) oder an dem Sockel (3) gekoppelt ist, und dessen anderes Ende mit einem weiteren Gliedelement (9b) (Koppel) gekoppelt ist,
**dadurch gekennzeichnet, dass**
der Schwenkarm (4) wippenartig ausgebildet ist, und
dass das der ersten Viergelenkkette (8) gegenüberliegende Ende des weiteren Gliedelements (9b) mit einem freien Ende (9c) eines ersten Bereichs (4a) des Schwenkarms (4) gekoppelt ist.

2. Roboter nach Anspruch 1, **dadurch gekennzeichnet, dass** die Gliedelemente (8a-c; 9a-c; 10a-10c; 15a-15c; 16a-c) aus stabförmigen und/oder plattenförmigen Elementen bestehen die jeweils an ihren freien Enden ein Gelenk oder eine Aufnahme für ein Gelenk aufweisen.

3. Roboter nach Anspruch 1, **dadurch gekennzeichnet, dass** Sockel (3) und/oder Schwenkarm (4) und/oder Tragarm (5) und/oder Gliedelemente (8a-c; 9a-c; 10a-10c; 15a-15c; 16a-c) platten-und/oder stabförmig ausgebildet sind und über platten- und/oder stabförmige Verbindungselemente miteinander verbunden sind.

4. Roboter nach Anspruch 1, **dadurch gekennzeichnet, dass** wahlweise eines oder mehrere der nachfolgenden Elemente aus einem Leichtbaumaterial besteht:
- Tragarm (5),
- Schwenkarm (4),
- Sockel (3),
- Gliedelemente (8a-c; 9a-c; 10a-10c; 15a-15c; 16a-c).

5. Roboter nach einem der Ansprüche 1 bis 4, **dadurch gekennzeichnet, dass** zur kinematischen Bewegung des Tragarms (5) eine Viergelenkkette vorgesehen ist, wobei diese ein erstes Gliedelement aufweist, das drehfest mit einer Antriebswelle (7a) einer Antriebseinheit (7) gekoppelt ist, an das erste Gliedelement (Kurbel) sich an dem der Antriebswelle (7a) gegenüberliegenden Ende ein weiteres Gliedelement als Koppel anschliesst und dieses wiederum drehgelenkig mit dem Tragarm (5) gekoppelt ist, der das dritte Gliedelement in Ausbildung einer Schwinge darstellt.

6. Roboter nach Anspruch 5, **dadurch gekennzeichnet, dass** an Stelle einer Viergelenkkette nach Anspruch 5 zwei Viergelenkketten derart ausgebildet sind, dass an Stelle der Koppel nach Anspruch 5 zwei Gliedelemente treten, wobei diese Gliedelemente jeweils die Koppeln einer ersten Viergelenkkette und einer zweiten Viergelenkkette darstellen, wobei von der drehgelenkigen Verbindung dieser beiden Gliedelemente sich ein weiteres, drehgelenkig verbundenes Gliedelement erstreckt, das am freien Ende drehgelenkig mit dem Schwenkarm gekoppelt ist und die Schwinge der ersten Viergelenkkette sowie die Kurbel der zweiten Viergelenkkette darstellt.

7. Roboter nach einem der Ansprüche 1 bis 4, **dadurch gekennzeichnet, dass** zur kinematischen Bewegung des Tragarms (5) drei weitere Viergelenkketten (10, 15, 16) vorgesehen sind, wobei die dritte Viergelenkkette (10) ein erstes Gliedelement (10a) aufweist, das drehfest mit einer Antriebswelle (7a) einer zweiten Antriebseinheit (7) gekoppelt ist, an das erste Gliedelement (10a) (Kurbel) sich an dem der Antriebswelle (7a) gegenüberliegenden Ende ein weiteres Gliedelement (10b) als Koppel anschliesst und an dieses ein drittes Gliedelement (10c) als Schwinge anschliesst, wobei das freie Ende dieses dritten Gliedelements (10c) der dritten Viergelenkkette (10) wiederum drehgelenkig mit dem Schwenkarm (4) gekoppelt ist, dieses dritte Gliedelement (10c) der dritten Viergelenkkette (10) das erste Gliedelement (15a) der vierten Viergelenkkette (15) ist, das als Kurbel dient, wobei es mit dem Ende eines zweiten Gliedelements (15b) der vierten Viergelenkkette (15) gekoppelt ist und dieses wiederum drehgelenkig mit einem dritten Gliedelement (15c) gekoppelt ist, dessen freies Ende wiederum mit dem Schwenkarm (4) drehgelenkig verbunden ist, dieses dritte Gliedelement (15c) der vierten Viergelenkkette (15) das erste Gliedelement (16a) der fünften Viergelenkkette (16) ist, das als Kurbel dient, wobei es mit dem Ende eines zweiten Gliedelements (16b) der fünften Viergelenkkette (16) gekoppelt ist und dieses wiederum drehgelenkig mit Tragarm (5) gekoppelt ist, der das dritte Gliedelement (16c) in Ausbildung einer Schwinge darstellt.

8. Roboter nach Anspruch 7, **dadurch gekennzeichnet, dass** die Anlenkung des zweiten Gliedelements (16b) der fünften Viergelenkkette (16) von der Anlenkung des Schwenkarms (4) an den Tragarm (5) beabstandet ist.

## Claims

1. A robot, compromising:
- a base (3);
- a pivot arm (4), which is articulated on the base (3) and is pivotable about a rotational axis (13), wherein a mount for a support arm (5) can be provided at a free end of a second part (4b) of the pivot arm (4);
- at least one drive unit (6,7) for driving the pivot arm (4) and the possible support arm (5), and
- a plurality of link elements for transmitting the movement to the pivot arm (4);
- wherein a first drive unit (6) is coupled to a first four-bar linkage (8), wherein a first link element (8a) in the form of crank is coupled in rotationally fixed manner to a first drive shaft (6a) which is mounted in the base (3) and connected to the drive unit (6) such that this first link element (8a) can rotate, in such a way that the pivot arm (4) can be pivoted about the second rotational axis (13), since a free end of the first link element (8a) is coupled to a second link element (8b) as a coupling and its free end is coupled to a third link element (8c) as a swing arm, whose free end in turn is arranged in a fixed position relative to the base (3) or on the base (3) and thus forms the link elements of the first four-bar linkage (8),
- wherein the first-bar linkage (8) is coupled to a second-four bar linkage (9) such that the second-four bar linkage (9) comprises a link element (9a) which corresponds to the third link element (8c) of the first four-bar linkage (8), whose one free end is coupled in a fixed position relative to the base (3) or on the base (3), and its other end is coupled to a further link element (9b) (coupling),
**characterised in that**
the pivot arm (4) is in the form of a rocker, and
that the end of the further link element (9b) opposite to the first four-bar linkage (8) is coupled to a free end (9c) of a first part (4a) of the pivot arm (4).

2. The robot according to claim 1, wherein the plurality of link elements (8a-c; 9a-c; 10a-10c; 15a-15c; 16a-c) comprise rod-shaped and/or plate-shaped elements, each of the plurality of link elements having a joint or a respectable for a joint at their free ends.

3. The robot according to claim 1, wherein the base (3) and/or the pivot arm (4) and/or the support arm (5) and/or link elements (8a-c; 9a-c; 10a-10c; 15a-15c; 16a-c) are of plate-shaped and/or rod-shaped construction and are connected to one another via plate-shaped and/or rod-shaped connecting elements.

4. The robot according to claim 1, **characterised in that** optionally one or more of the following elements consists of a lightweight material:
- support arm (5),
- pivot arm (4),
- base (3)
- link elements (8a-c; 9a-c; 10a-10c; 15a-15c; 16a-c).

5. Robot according to one of claims 1 to 4, wherein a four-bar linkage is provided for the kinematic movement of the support arm (5), wherein this comprises a first link element coupled in a rotationally fixed manner to a drive shaft (7a) of a drive unit (7), the first link element (crank) is followed by a further link element as a coupling at the opposite end of the drive shaft (7a) and this in turn is coupled pivotally to the support arm (5), which represents the third link element in the form of a swing arm.

6. Robot according to claim 5, wherein instead of one four-bar linkage, two four-bar linkages are provided such that instead of the coupling according to claim 5, two link elements are used, wherein these link elements each form the couplings of a first four-bar linkage and a second four-bar linkage, a further pivotally connected link element extends from the pivotal connection of those two link elements, the free end of which is pivotally coupled to the pivot arm and forms the swing arm of the first four-bar linkage and the crank of the second four-bar linkage.

7. The robot according one of the claims 1 to 4, wherein three more four-bar linkages (10, 15, 16) are provided for the kinematic movement of the support arm (5), wherein the third four-bar linkage (10) has a first link element (10a) coupled in rotationally fixed manner to a drive shaft (7a) of a second drive unit (7), the first link element (10a) (crank) is followed by a further link element (10b) as a coupling at the opposite end of the drive shaft (7a) and this is connected to a third link element (10c) as a swing arm, wherein the free end of this third link element (10c) of the third four-bar linkage (10) is pivotally coupled to the pivot arm (4), this third link element (10c) of the third four-bar linkage (10) is the first link element (15a) of the fourth four-bar chain (15), serving as a crank, wherein it is coupled to the end of a second link element (15b) of the fourth four-bar linkage (15), which in turn is pivotally coupled to a third link element (15c), the free end of which in turn is pivotally connected to the pivot arm (4), this third link element (15c) of the fourth four-bar linkage (15) is the first link element (16a) of the fifth four-bar linkage (16), serving as a crank, wherein it is coupled to the end of a second link element (16b) of the fifth four-bar linkage (16) and this in turn is pivotally coupled to the support arm (5), which represents the third link element (16c) in the form of a swing.

8. Robot according to claim 7, wherein the articulation of the second link element (16b) of the fifth fourth-bar linkage (16) is offset relative to the articulation of the pivot arm (4) on the support arm (5).

## Revendications

1. Robot, comprenant
- un socle (3),
- un bras orientable (4) articulé au niveau du socle (3) et pouvant pivoter autour d'un axe de rotation (13), un logement destiné à une articulation rotoïde d'un bras en porte-à faux (5) pouvant être fourni au niveau d'une extrémité libre d'une seconde région (4b) du bras orientable (4),
- au moins une unité d'entraînement (6, 7) permettant d'entraîner le bras orientable (4) et le bras en porte-à faux (5), ainsi que
- plusieurs éléments articulés permettant de transmettre le mouvement au bras orientable (4),
- dans lequel une première unité d'entraînement (6) est couplée à une première chaîne cinématique à quatre joints articulés (8), dans lequel un premier élément articulé (8a) réalisé sous forme de manivelle est couplé de manière solidaire en rotation à un premier arbre d'entraînement (6a) qui est monté dans le socle (3) et qui est relié à l'unité d'entraînement (6), de telle manière que ledit premier élément articulé (8a) peut être déplacé selon un mouvement rotatoire, de telle manière que le bras orientable (4) peut pivoter autour du deuxième axe de rotation (13), car l'extrémité libre du premier élément articulé (8a) est couplée à un deuxième élément articulé (8b) faisant office de bielle et l'extrémité libre dudit deuxième élément articulé est couplée à un troisième élément articulé (8c) faisant office de bielle oscillante dont l'extrémité libre est à son tour agencée au niveau du socle (3) ou de manière relativement fixe par rapport au socle (3), ce qui forme les éléments articulés de la première chaîne cinématique à quatre joints articulés (8), et
- dans lequel une deuxième chaîne cinématique à quatre joints articulés (9) est couplée à la première chaîne cinématique à quatre joints articulés (8), de telle manière que la deuxième chaîne cinématique à quatre joints articulés (9) comprend un élément articulé (9a), correspondant au troisième élément articulé (8c) de la première chaîne cinématique à quatre joints articulés (8), dont une extrémité libre est couplée au niveau du socle (3) ou de manière relativement fixe par rapport au socle (3) et dont l'autre extrémité est couplée à un autre élément articulé (9b) (bielle),
**caractérisé en ce que**
le bras orientable (4) est réalisée à la manière d'une flèche articulée, et
**en ce que** l'extrémité, opposée à la première chaîne cinématique à quatre joints articulés (8), de l'autre élément articulé (9b) est couplée à une extrémité libre (9c) d'une première région (4a) du bras orientable (4).

2. Robot selon la revendication 1, **caractérisé en ce que** les éléments articulés (8a à c ; 9a à c ; 10a à 10c ; 15a à 15c ; 16a à c) sont constitués d'éléments en forme de barre et/ou de plaque qui présentent respectivement au niveau de leurs extrémités libres une articulation ou un logement destiné à une articulation.

3. Robot selon la revendication 1, **caractérisé en ce que** le socle (3) et/ou le bras orientable (4) et/ou le bras en porte-à faux (5) et/ou les éléments articulés (8a à c ; 9a à c ; 10a à 10c ; 15a à 15c ; 16a à c) sont réalisés en forme de plaque et/ou de barre et sont reliés entre eux par des éléments de liaison en forme de plaque et/ou de barre.

4. Robot selon la revendication 1, **caractérisé en ce qu'**un ou plusieurs élément(s) ci-dessous au choix est/sont fabriqué(s) en un matériau de fabrication léger :
- bras en porte-à faux (5),
- bras orientable (4),
- socle (3),
- éléments articulés (8a à c ; 9a à c ; 10a à 10c ; 15a à 15c ; 16a à c).

5. Robot selon l'une quelconque des revendications 1 à 4, **caractérisé en ce qu'**une chaîne cinématique à quatre joints articulés est fournie en vue du mouvement cinématique du bras en porte-à faux (5), dans lequel ladite chaîne cinématique présente un premier élément articulé couplé de manière solidaire en rotation à un arbre d'entraînement (7a) d'une unité d'entraînement (7), un élément articulé supplémentaire faisant office de bielle est raccordé au premier élément articulé (manivelle) au niveau de l'extrémité opposée à l'arbre d'entraînement (7a), et ledit élément articulé supplémentaire est à son tour couplé de manière articulée en rotation au bras en porte-à faux (5) qui représente le troisième élément articulé sous la forme d'un bras oscillant.

6. Robot selon la revendication 5, **caractérisé en ce que**, à la place d'une chaîne cinématique à quatre joints articulés selon la revendication 5, deux chaînes cinématiques à quatre joints articulés sont réalisées de telle manière que deux éléments articulés apparaissent à la place de la bielle selon la revendication 5, lesdits éléments articulés représentant respectivement les bielles d'une première chaîne cinématique à quatre joints articulés et d'une deuxième chaîne cinématique à quatre joints articulés, dans lequel un élément articulé supplémentaire relié de manière articulée en rotation s'étend à partir de la liaison articulée en rotation desdits deux éléments articulés, ledit élément articulé supplémentaire étant couplé au niveau de son extrémité libre de manière articulée en rotation au bras orientable et représentant le bras oscillant de la première chaîne cinématique à quatre joints articulés ainsi que la manivelle de la deuxième chaîne cinématique à quatre joints articulés.

7. Robot selon l'une quelconque des revendications 1 à 4, **caractérisé en ce que** trois chaîne cinématiques à quatre joints articulés (10, 15, 16) supplémentaire sont fournies en vue du mouvement cinématique du bras en porte-à faux (5), dans lequel la troisième chaîne cinématique à quatre joints articulés (10) présente un premier élément articulé (10a) couplé de manière solidaire en rotation à un arbre d'entraînement (7a) d'une deuxième unité d'entraînement (7), un élément articulé (10b) supplémentaire faisant office de bielle est raccordé au premier élément articulé (10a) (manivelle) au niveau de l'extrémité opposée à l'arbre d'entraînement (7a), et un troisième élément articulé (10c) faisant office de bielle oscillante est raccordé audit élément articulé supplémentaire, dans lequel l'extrémité libre dudit troisième élément articulé (10c) de la troisième chaîne cinématique à quatre joints articulés (10) est à son tour couplée de manière articulée en rotation au bras orientable (4), ledit troisième élément articulé (10c) de la troisième chaîne cinématique à quatre joints articulés (10) est le premier élément articulé (15a), servant de manivelle, de la quatrième chaîne cinématique à quatre joints articulés (15), celui-ci étant couplé à l'extrémité d'un deuxième élément articulé (15b) de la quatrième chaîne cinématique à quatre joints articulés (15) et ce dernier étant à son tour couplé de manière articulée en rotation à un troisième élément articulé (15c) dont l'extrémité libre est à son tour reliée de manière articulée en rotation au bras orientable (4), ledit troisième élément articulé (15c) de la quatrième chaîne cinématique à quatre joints articulés (15) étant le premier élément articulé (16a), servant de manivelle, de la cinquième chaîne cinématique à quatre joints articulés (16), celui-ci étant couplé à l'extrémité d'un deuxième élément articulé (16b) de la cinquième chaîne cinématique à quatre joints articulés (16) et ce dernier étant à son tour couplé de manière articulée en rotation au bras en porte-à faux (5) qui représente le troisième élément articulé (16c) sous la forme d'un bras oscillant.

8. Robot selon la revendication 7, **caractérisé en ce que** l'articulation du deuxième élément articulé (16b) de la cinquième chaîne cinématique à quatre joints articulés (16) se situe à distance de l'articulation du bras orientable (4) présente au niveau du bras en porte-à faux (5).
